# EUROPÄISCHE PATENTANMELDUNG

(11) **EP 0 630 714 A1**
(43) Veröffentlichungstag der Anmeldung: **28.12.1994**
(21) Anmeldenummer: 94107644.0
(22) Anmeldetag: 17.05.1994
(51) Int. Cl.: B23B 5/12, B23B 27/14

(54) **Schneideinsatz zum Schälen bzw. Wellendrehen**

(30) Priorität: 19.05.1993 DE 4316822
(71) Anmelder: SAAR-HARTMETALL UND WERKZEUGE GMBH, D-66333 Völklingen (DE)
(72) Erfinder: Lang, Gernot, D-66802 Ueberherrn (DE); Borger, Jean-Claude, F-57320 Vaudreching (FR)
(74) Vertreter: Vièl, Georg, Dipl.-Ing.

(57) **Zusammenfassung**

Die Erfindung betrifft einen Schneideinsatz zum Schälen bzw. Wellendrehen mit wenigstens einer Haupt- und Nebenschneide.

Die Erfindung besteht darin, daß wenigstens die Hauptschneide (1) zu dem Schneideinsatz (5) hin um einen Winkel (α) geneigt angeordnet ist.

Die mit der Erfindung erzielten Vorteile bestehen insbesondere darin, daß bei einer Haupt- (1) und Nebenschneide (2) eine sehr große wirksame Nebenschneide realisiert werden kann und damit sehr große Vorschübe eingestellt werden können. Besonders hervorzuheben ist, daß bei gegebener Länge des Schneideinsatzes und vorgegebenen Verhältnissen zwischen Haupt- und Nebenschneiden z. B. insgesamt vier Schneidensysteme, bestehend aus Haupt- und Nebenschneide, angeordnet sein können. Es stehen dabei große Nebenschneiden zur Verfügung, so daß mit solchen Schneideinsätzen mit großen Vorschüben gearbeitet werden kann, bei guter Oberflächengüte des zu bearbeitenden Werkstückes.

## Beschreibung

Die Erfindung betrifft einen Schneideinsatz zum Schälen bzw. Wellendrehen mit wenigstens einer Haupt- und Nebenschneide.

Das Schälen von Stäben, Rohren oder beispielsweise Draht wird in großem Umfang angewandt. Deshalb bemühen sich Betreiber von Schälmaschinen und Hersteller von Werkzeugen für solche Maschinen, die Arbeitsbedingungen ständig zu verbessern, um kostengünstige und qualitativ hochwertige Produkte fertigen zu können. Besonderes Augenmerk gilt dabei der Gestaltung der Schneidengeometrie bzw. des Schneidenelementes, das meistens ein Schneideinsatz aus Schneidstoffen wie z. B. Schnellstahl, Hartmetall, Keramik oder aus einer Kombination dieser Materialien mit einem Trägerkörper aus anderem Material ist. Je nach Verwendungszweck ist der Schneideinsatz ein- oder mehrschneidig.

Es ist ein spanabhebendes Werkzeug zum Schälen bzw. Wellendrehen bekannt, bei dem der Schneideinsatz als längliches Achteck ausgebildet ist (DE-PS 18 00 195). Mit diesem Schneideinsatz werden sehr gute Ergebnisse in bezug auf Oberflächenqualität des geschälten Gutes erzielt.

Zum Erzielen einer sehr hohen Spantiefe bei großen Vorschüben ist es bekannt, den Schneideinsatz so auszubilden, daß er eine erste Hauptschneide und eine Nebenschneide aufweist (DE-OS 28 25 748).

Alle bekannten Schneideinsätze haben, von der Seite gesehen, von der Oberkante zur Unterkante durchgehend ausgebildete Schneiden, d. h. die zugeordneten Flächen sind senkrecht zur Unter- bzw. Oberseite des Schneideinsatzes angeordnet. So können zwar lange Nebenschneiden für große Vorschübe realisiert werden, aber dann sind nur zwei Schneiden an dem Schneideinsatz anzubringen. Sind vier Schneiden erwünscht, so werden bei gleicher Gesamtlänge der Schneideinsätze die wirksamen Nebenschneiden verhältnismäßig kurz, so daß so ausgebildete Schneideinsätze für große Vorschübe nicht geeignet sind.

Der Erfindung liegt die Aufgabe zugrunde, einen Schneideinsatz zu schaffen, bei dem bei hoher Zerspanungsleistung enge Toleranzen und eine hohe Oberflächengüte des zerspanten Gutes erreicht werden.

Diese Aufgabe wird erfindungsgemäß dadurch gelöst, daß wenigstens die Hauptschneide zu dem Schneideinsatz hin um einen Winkel geneigt angeordnet ist.

Eine Weiterbildung der Erfindung besteht darin, daß der Winkel 2 bis 20° beträgt.

Noch eine Weiterbildung der Erfindung besteht darin, daß bei zwei Haupt- und zwei Nebenschneiden die zwei Hauptschneiden und die erste Nebenschneide um einen Winkel ( α, β, γ ) zu dem Schneideinsatz hin geneigt angeordnet sind.

Eine andere Weiterbildung der Erfindung besteht darin, daß bei mehreren Haupt- und Nebenschneiden alle Schneiden um einen Winkel zu dem Schneideinsatz hin geneigt angeordnet sind.

Weiterhin ist erfindungsgemäß vorgesehen, daß bei gegebener Länge des Schneideinsatzes und vorgegebenen Verhältnissen zwischen Haupt- und Nebenschneiden insgesamt vier Schneidensysteme (Haupt- und Nebenschneide) angeordnet sind.

Erfindungsgemäß ist auch vorgesehen, daß eine oder mehrere Schneiden konkav ausgebildet sind.

Auf der anderen Seite kann erfindungsgemäß vorgesehen sein, daß eine oder mehrere Schneiden konvex ausgebildet sind.

Die mit der Erfindung erzielten Vorteile bestehen insbesondere darin, daß bei einer Haupt- und Nebenschneide eine sehr große wirksame Nebenschneide realisiert werden kann und damit sehr große Vorschübe eingestellt werden können. Besonders hervorzuheben ist, daß bei gegebener Länge des Schneideinsatzes und vorgegebenen Verhältnissen zwischen Haupt- und Nebenschneiden z. B. insgesamt vier Schneidensysteme, bestehend aus Haupt- und Nebenschneide, angeordnet sein können. Es stehen dabei große Nebenschneiden zur Verfügung, so daß mit solchen Schneideinsätzen mit großen Vorschüben gearbeitet werden kann, bei guter Oberflächengüte des zu bearbeitenden Werkstückes.

Die Erfindung wird anhand zweier Ausführungsbeispiele erläutert.

Es zeigt
- Fig. 1, Fig. 2 und Fig. 3: einen Schneideinsatz gemäß der Erfindung in drei Ansichten,
- Fig. 4: die Ansicht X aus Fig. 3,
- Fig. 5, Fig. 6 und Fig. 7: einen weiteren Schneideinsatz gemäß der Erfindung in drei Ansichten,
- Fig 8, Fig. 9 und Fig. 10: drei Schnitte aus Fig. 7.

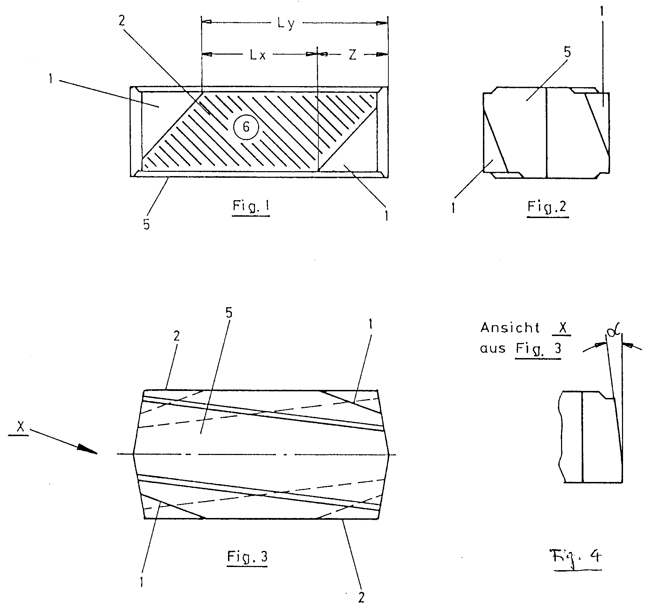

Aus den Figuren 1 bis 3 ist das Prinzip ersichtlich, daß erfindungsgemäß zu einer Nebenschneide führt, die deutlich länger als bekannte Nebenschneiden sind, was einen Schneideinsatz 5 mit vier Schneiden anbelangt, d. h. je zwei Schneiden auf der Ober- und der Unterseite des Schneideinsatzes 5.

Die einzelnen Schneiden bestehen aus je einer Hauptschneide 1 und einer Nebenschneide 2. Aus den Figuren 1, 2 und 3 sowie Figur 4 ist zu ersehen, daß die Hauptschneide 1 zu dem Schneideinsatz 5 hin um einen Winkel α , der beispielsweise 2 bis 20° betragen kann, geneigt angeordnet ist. Dadurch ergibt sich bei dem Schneideinsatz 5 eine Länge l_{y} für die Nebenschneide und eine der Nebenschneide 2 zugeordnete, relativ große Fläche 6 (Fig. 1). Bei einem Schneideinsatz gemäß dem Stand der Technik d. h. ohne die erfindungsgemäße Neigung der Hauptschneide hätte die Nebenschneide die Länge lₓ.

Die Figuren 1, 2 und 3 sowie die Fig. 4 zeigen, daß selbst bei einem Vier-Schneiden-Schneideinsatz 5 verhältnismäßig lange Nebenschneiden 2 verwirklicht werden können, womit beim Einsatz ein großer Vorschub einhergeht und auch sehr gute Oberflächenqualitäten erzielt werden können.

In den Fällen, in denen es nicht auf besonders große Vorschübe bzw. Oberflächengüten ankommt, könnte bei Anwendung der Erfindung der Schneideinsatz 5 um die Strecke Z (Fig. 1) verkürzt werden, weil dann immer noch die an sich bekannte Länge lₓ der Nebenschneide 2 vorhanden wäre, was zu Einsparungen beispielsweise von Schneidwerkstoff (Hartmetall) führen würde.

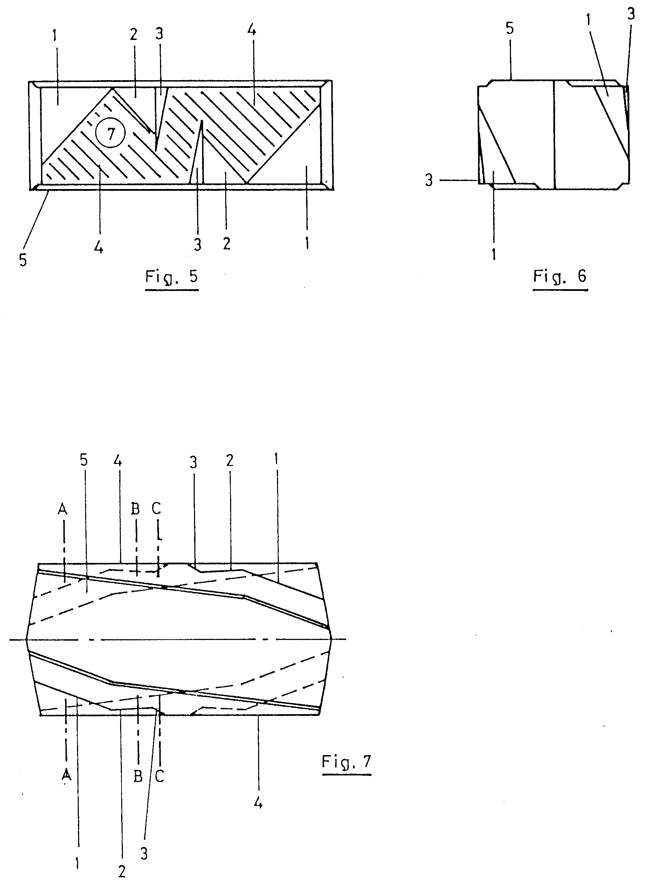

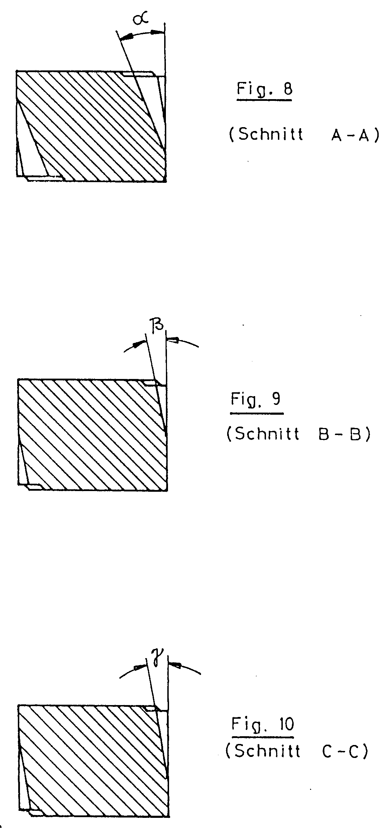

Ein anderes Ausführungsbeispiel gemäß der Erfindung zeigen die Figuren 5 bis 7 sowie die Figuren 8 bis 10. Der Schneideinsatz 5 hat auch in diesem Ausführungsbeispiel je zwei Schneiden auf der Ober- und der Unterseite, also vier Schneiden insgesamt. Jede Schneide besteht aus zwei Hauptschneiden 1 und 3 und zwei Nebenschneiden 2 und 4. In diesem Beispiel sind die Hauptschneide 1, die dazugehörige Nebenschneide 2 sowie die Hauptschneide 3 um Winkel α, β bzw. γ zu dem Schneideinsatz 5 hin geneigt angeordnet. Gegenüber bekannten Schneideinsätzen ergeben sich somit bei sonst gleicher Schneideinsatzlänge verhältnismäßig lange Nebenschneiden 2 und 4 bzw. eine verhältnismäßig große den Nebenschneiden zugeordnete Fläche 7, so daß auch bei diesem Ausführungsbeispiel ein für große Vorschübe und hohe Oberflächengüten geeigneter Schneideinsatz zur Verfügung steht.

In den meisten Fällen werden die geneigt angeordneten Schneiden plan sein. Je nach Anwendungsfall, beispielsweise ein Einsatz des Schneideinsatzes 5 in einem besonderen Halter, wobei der Schneideinsatz 5 geneigt angeordnet ist, können eine oder mehrere der geneigt angeordneten Schneiden konkav oder konvex ausgebildet sein.

## Patentansprüche

1. Schneideinsatz zum Schälen bzw. Wellendrehen mit wenigstens einer Haupt- und Nebenschneide, **dadurch gekennzeichnet**, daß wenigstens die Hauptschneide (1) zu dem Schneideinsatz (5) hin um einen Winkel (α) geneigt angeordnet ist.

2. Schneideinsatz nach Anspruch 1, **dadurch gekennzeichnet**, daß der Winkel (α) 2 bis 20° beträgt.

3. Schneideinsatz nach Anspruch 1, **dadurch gekennzeichnet**, daß bei zwei Haupt- (1, 3) und zwei Nebenschneiden (2, 4) die zwei Hauptschneiden (1, 3) und die erste Nebenschneide (2) um einen Winkel (α, β, γ ) zu dem Schneideinsatz (5) hin geneigt angeordnet sind.

4. Schneideinsatz nach Anspruch 1**, dadurch gekennzeichnet**, daß bei mehreren Haupt- (1,3) und Nebenschneiden (2, 4) alle Schneiden (1, 2, 3, 4) um einen Winkel zu dem Schneideinsatz (5) hin geneigt angeordnet sind.

5. Schneideinsatz nach Anspruch 1, **dadurch gekennzeichnet**, daß bei gegebener Länge des Schneideinsatzes (5) und vorgegebenen Verhältnissen zwischen Haupt- und Nebenschneiden insgesamt vier Schneidensysteme (Haupt- und Nebenschneide) angeordnet sind.

6. Schneideinsatz nach Anspruch 1, 3 oder 4, **dadurch gekennzeichnet**, daß eine oder mehrere Schneiden konkav ausgebildet sind.

7. Schneideinsatz nach Anspruch 1, 3 oder 4, **dadurch gekennzeichnet**, daß eine oder mehrere Schneiden konvex ausgebildet sind.
